# EUROPÄISCHE PATENTSCHRIFT

(11) **EP 4 571 036 B1**
(45) Veröffentlichungstag und Bekanntmachung des Hinweises auf die Patenterteilung: **04.02.2026**
(21) Anmeldenummer: 23215580.4
(22) Anmeldetag: 11.12.2023
(51) Int. Cl.: E06B 9/58, E06B 9/68

(54) **SICHERHEITSEINRICHTUNG MIT BESCHLEUNIGUNGSSENSOR FÜR INDUSTRIETORE**
SAFETY DEVICE WITH ACCELERATION SENSOR FOR INDUSTRIAL DOORS
DISPOSITIF DE SÉCURITÉ AVEC CAPTEUR D'ACCÉLÉRATION POUR PORTES INDUSTRIELLES

(43) Veröffentlichungstag der Anmeldung: 18.06.2025
(73) Patentinhaber: Cedes AG, 7302 Landquart (CH)
(72) Erfinder: Kagerer, Bernd, 40213 Düsseldorf (DE)
(74) Vertreter: RavensPAT Patentanwälte Partnerschaft mbB

(56) Entgegenhaltungen:
- WO-A1-2017/005388
- US-A1- 2004 075 046

## Beschreibung

Die Erfindung betrifft eine Sicherheitseinrichtung für Industrietore nach dem Oberbegriff des Anspruchs 1 sowie ein Industrietorsystem nach dem Oberbegriff des Anspruchs 7.

Aus dem Stand der Technik ist bekannt, Industrietore mit verschiedenartigen Schaltern zu versehen, um beim Ausscheren des Tores aus der Führungsschiene, also einem Störfall, die Bewegung des Tors unterbrechen zu können. Bei Schnelllauftoren werden herkömmlicherweise zum Beispiel Funkcrashschalter eingesetzt, bei Sektionaltoren sind es Schlafseilschalter. Bei Rolltoren wiederum ist diese Absicherung aus technischen Gründen sogar unüblich.

Aus der US 2004/075046 A1 und entsprechend dem Oberbegriff des Anspruchs 1 ist ein System zur Erkennung der Anwesenheit eines Körpers in der Nähe einer Türöffnung und insbesondere ein System bekannt, das dazu beiträgt, dass sich eine Tür nicht versehentlich gegen den Körper schließt.

Aufgabe der Erfindung ist es, eine Sicherheitseinrichtung für Industrietore bereitzustellen, die bei mindestens gleichem Sicherheitsniveau geringere Montageanforderungen stellt.

Die Aufgabe wird, ausgehend von einer Sicherheitseinrichtung bzw. einem Industrietorsystem der eingangs genannten Art, durch die kennzeichnenden Merkmale des Anspruchs 1 bzw. des Anspruchs 7 genannt.

Durch die in den abhängigen Ansprüchen genannten Maßnahmen sind vorteilhafte Ausführungen und Weiterbildungen der Erfindung möglich.

Die erfindungsgemäße Sicherheitseinrichtung ist grundsätzlich für Industrietore bestimmt, also z.B. für Industrietorsysteme, welche zum Schließen oder Abdecken einer Toröffnung ein Rolltor oder Folientor, ein Sektionaltor oder ein Schnelllauftor verwenden. Wie sich herausstellt, kann die Erfindung vorteilhafterweise gerade auch bei Roll- und Folientoren eingesetzt werden, bei denen bislang ein Einsatz aus technischen Gründen problematisch war. Ein Grund hierfür liegt darin, dass herkömmliche Sensoren aus dem Stand der Technik auf dem beweglichen, mitfahrenden Teil des Industrietores angebracht wurden, was bei leichten Roll- oder Folientoren, die auch platzsparend auf einer Rolle aufgewickelt werden, technisch schwierig ist. Wie nachstehend beschrieben, wird erfindungsgemäß dieser Vorteil erreicht, indem der feststehende Teil des optischen Sensorsystems, der typischerweise parallel zur bzw. an einer Führungsleiste angebracht ist, zusätzlich einen Beschleunigungssensor aufweist, mit dem Vibrationen detektiert werden können.

Die Industrietore werden zwischen zwei Führungsleisten gelagert und bei der Bewegung geführt. Die Führungsleisten können z.B. ein U-förmiges Profil aufweisen. Die Ränder zu beiden Seiten des Tores werden in den U-förmigen Aufnahmen geführt. Die beiden Führungsleisten können mit der offenen Seite des U-Profils zueinander ausgerichtet sein, damit die Torränder zu beiden Seiten in dem U-Profil geführt werden und laufen können.

Bei dem optischen Sensorsystem handelt es sich je nach Ausführungsform z.B. um eine Lichtschranke oder ein Lichtgitter. Es kommen sowohl Einweg- als auch Zweiweglichtschranken bzw. -detektoren in Betracht. Bei Einwegdetektoren stehen sich Sender und Empfänger gegenüber, der Sender in der Sensorleiste auf der einen Seite des Tores und der Empfänger in der Sensorleiste auf der anderen Seite des Tores. Bei einer Zweiweglichtschranke sind Sender und Empfänger in derselben Sensorleiste untergebracht. In der gegenüberliegenden Sensorleiste befindet sich dann ein Reflektor, der den vom Sender kommenden Strahl zurück zum Empfänger reflektiert. Denkbar ist auch, dass eine Sensorleiste mit einem Distanzsensor, z.B. einem TOF-Sensor (Time-of-Flight-Sensor) eingesetzt wird. Dieser Sensor kann im Unterschied zu einem reinen Unterbrechungssensor (z.B. einfache Lichtschranke) nicht nur die Information liefern, dass überhaupt ein Objekt vorhanden ist, sondern auch, in welcher Entfernung sich dieses Objekt befindet.

Tritt das Tor aus der Führungsschiene oder -leiste aus, so entstehen Vibrationen, die in der Regel stärker als im normalen Betrieb auftretende Vibrationen beim Fahren des Tores in der Führung auftreten. Diese Vibrationen können detektiert werden. Bislang herrschte das technische Vorurteil, dass diese Störung besonders gut erfasst werden kann, wenn der Sensor direkt auf dem sich bewegenden Tor sitzt und mit diesem mitfährt. Zum einen kann die Montage am Tor bei verschiedenen Torarten problematisch sein, z.B. bei Roll- oder Folientoren, die flexibel sind und zusammengerollt werden. Zudem sind die Arten der Datenübertragung vom Sensor eingeschränkt, z.B. muss eine drahtlose Übertragung meistens erfolgen.

Das optische Sensorsystem ist in einem Gehäuse untergebracht. Bei einer Einzellichtschranke kann es sich um ein Einzelgehäuse nur für den Sender und ein separate nur für den Empfänger handeln. Bei einem Lichtgitter können Sender bzw. Empfänger auch in einer Sensorleiste untergebracht sein. Dieses Gehäuse ist unmittelbar an der Führungsleiste anbringbar, sodass sich die Vibrationen mechanisch von der Führungsleiste auf das Gehäuse übertragen können. Die Einzelgehäuse können bzw. die Sensorleiste kann parallel zur entsprechenden Führungsschiene angeordnet werden. Erfindungsgemäß ist nun aber zusätzlich ein Beschleunigungssensor in dem Gehäuse angeordnet und kann somit die Vibrationen messen. Dadurch kann in vorteilhafter Weise die Montage auf dem beweglichen Tor unterbleiben, der Sensor muss nicht mehr mit dem Tor mitfahren. Damit kann die erfindungsgemäße Sicherheitseinrichtung unter Beibehaltung des hohen Sicherheitsniveaus auch für grundsätzlich alle Arten von Torsystemen eingesetzt werden. Die Sensoreinrichtung kann also besonders flexibel eingesetzt werden.

Der Beschleunigungssensor kann platzsparend im Gehäuse, also sowohl in einer Sensorleiste als auch in einem Einzelgehäuse untergebracht sein. In vorteilhafter Weise ist der Beschleunigungssensor zudem auch in dem Gehäuse bzw. in der Sensorleiste angebracht, wo sich auch die Elektronik, insbesondere die Anbindung an die Auswerteeinheit befindet.

Darüber hinaus ist eine Auswerteeinheit vorgesehen, welche die Vibrationsdaten auswertet bzw. zumindest eine Zuordnung vornimmt und den Messdaten die Information zuordnet, ob das Industrietor aus der Führungsleiste ausgeschert ist oder nicht. Zum Beispiel kann die Auswerteeinheit annehmen, dass beim Verfahren des Tores eine gewisse Grundvibration stattfindet. Beim Ausscheren aus der Führungsleiste kann aber eine stärkere Vibration zu verzeichnen sein, sodass der Sensor diese Vibration ab einem gewissen Schwellwert, z.B. der Amplitude der Schwingungen, feststellt und als Störfall interpretiert.

Dieselbe oder ein weitere Auswerteeinheit kann ferner die Auswertung vornehmen, ob ein Objekt sich im Bereich der Torbewegung befindet und deshalb eine Gefahrensituation besteht oder nicht. Auch diese Auswerteeinheit kann mit der Torsteuerung verbunden sein und den Torantrieb stoppen oder die Bewegung freigeben.

Bei einer Weiterbildung der Erfindung kann die Auswerteeinheit eine Verbindung zu einem Server oder einer Cloud aufweisen. Je nachdem, wie komplex die Auswertung und Analyse, z.B. unter Verwendung einer Mustererkennung oder einer Analyse unter Berechnung und Erkennung der Einhüllenden der Vibrationsdaten, kann es vorteilhaft sein, eine leistungsstarke Rechnereinheit einzusetzen, zumal die Erkennung und Zuordnung auch in Echtzeit ablaufen soll. Denn eine Abschaltung der Torbewegung sollte unmittelbar und nicht mit großer Zeitverzögerung erfolgen. Da aber eine solche Recheneinheit sehr teuer ist und auch nicht in ein Torsystem verbaut werden kann, kann eine leistungsstarke Recheneinheit verwendet werden, auf die über das Internet zugegriffen werden kann. Somit die Auswerteeinheit in vorteilhafter Weise auch ein IOT-basierte (Internet of things) Auswertung implementieren.

Die Auswerteeinheit kann generell dann das Ergebnis der Auswertung, also insbesondere im einfachsten Fall ein digitales Signal, ob ein Störfall vorliegt oder auch nicht, an die Torsteuerung weiterleiten, sodass diese die Torbewegung fortführt oder stoppt.

Ein erfindungsgemäßes Industrietorsystem umfasst dementsprechend folglich ein Industrietor zum Schließen oder Abdecken einer Toröffnung, welchen in zwei Führungsleisten beidseitig des Tors beweglich bzw. verfahrbar gelagert ist. Darüber hinaus ist ein Torantrieb zum Verfahren des Tors vorgesehen. Um ein Ausscheren des Tors aus der Führung zu erfassen, insbesondere unabhängig von der Art des Torsystems, ist vorteilhafterweise eine erfindungsgemäße Sicherheitseinrichtung bzw. eine Sicherheitseinrichtung gemäß einem Ausführungsbeispiel der Erfindung vorgesehen.

In Bezug auf die Toröffnung können die Führungsleisten zum Beispiel an den Zargen der Toröffnung seitlich, d.h. jeweils beidseitig des Tors angebracht sein. Das Industrietor selbst ist oben im Bereich des Sturzes der Toröffnung im Allgemeinen angebracht.

Bei einem vorteilhaften Ausführungsbeispiel umfasst das Industrietorsystem auch eine entsprechende Torsteuerung, mit welcher die Sicherheitseinrichtung zusammenwirkt, d.h. welche von der Auswerteeinheit die Information erhält, ob ein Störfall vorliegt und die Torbewegung unmittelbar zu stoppen ist.

Grundsätzlich können je nach Ausführungsvariante auch die Auswerteeinheit und z.B. die Torsteuerung eine Baueinheit ausbilden oder separate Baueinheiten darstellen.

Bei einer besonders vorteilhaften Weiterbildung der Erfindung kann das Tor selbst sensorfrei ausgebildet sein, d.h. der Sensor muss nicht mit dem Tor mitfahren, sondern ist in einem statischen Teil, etwa der Sensorleiste bzw. dem Gehäuse untergebracht. Die Datenübertragung vom Sensor aus kann damit auch flexibler erfolgen, sei es drahtgebunden oder drahtlos.

### Ausführungsbeispiel:

Ein Ausführungsbeispiel der Erfindung ist in der Zeichnung dargestellt und wird nachstehend unter Angabe weiterer Einzelheiten und Vorteile näher erläutert.

Im Einzelnen zeigt:

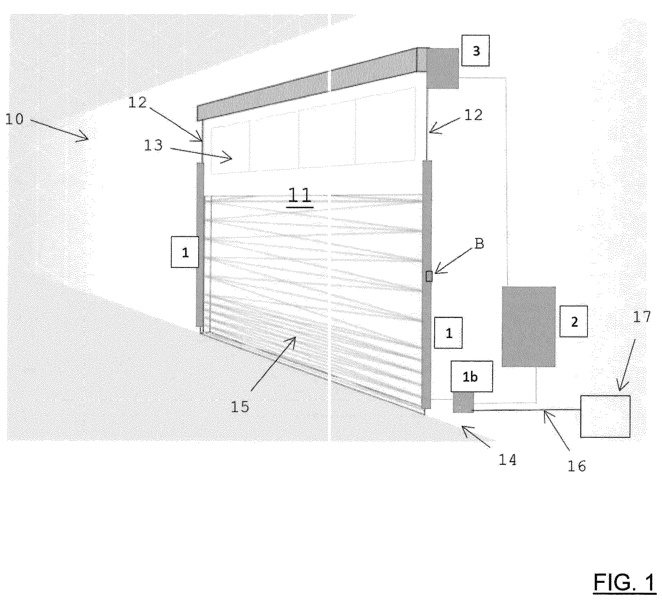

- Fig. 1:: ein Industrietorsystem mit einer Sicherheitseinrichtung gemäß der Erfindung.

Figur 1 zeigt ein Industrietorsystem 10 mit einer Toröffnung 11. Im Bereich der Zargen der Toröffnung ist beidseitig jeweils eine Führungsleiste 12 angeordnet, in der das Tor 13 laufen kann. Das Tor 13 ist im geöffneten Zustand im Bereich des Sturzes gelagert, wo auch der Torantrieb 3 sitzt.

Parallel zur Führung bzw. den Führungsleisten 12 sind die Sensorleisten 1 als Teil der Sicherheitseinrichtung 14 angeordnet, in den das Lichtgitter 15 untergebracht ist. Zudem weisen die Sensorleisten 1 einen Beschleunigungssensor B auf, der im oder auch am Gehäuse 1 untergebracht bzw. montiert ist. Lichtgitter 15 und Beschleunigungssensor B sind mit einer Auswerteeinheit 1b verbunden. Diese wiederum besitzt eine IOT-Anbindung 16 zu einem externen Server 17, um die Vibrationsdaten einer Mustererkennung bzw. unter Einbeziehung der Auswertung der Einhüllenden zu analysieren und zu entscheiden, ob ein Störfall vorliegt oder nicht. Das Ergebnissignal wird dann an die Torsteuerung 2 übermittelt, sodass der Antrieb entweder freigeben ist oder gestoppt wird. Die Torsteuerung 2 wiederum ist mit dem Torantrieb 3 verbunden und gibt diese Freigabe oder diesen Unterbrechungsbefehl an den Torantrieb 3 weiter. Falls möglich, kann auch ein Befehl zum Neueinfädeln des Tors übermittelt werden.

### Bezugszeichen:

- 1: Sensorleiste
- 1b: Auswerteeinheit
- 2: Torsteuerung
- 3: Torantrieb
- 10: Industrietorsystem
- 11: Toröffnung
- 12: Führungsleiste
- 13: Tor
- 14: Sicherheitseinrichtung
- 15: Lichtgitter
- 16: IOT-Anbindung
- 17: externer Server
- B: Beschleunigungssensor

## Patentansprüche

1. Sicherheitseinrichtung (14) für Industrietore (13), welche zwischen zwei Führungsleisten (12) bewegbar gelagert sind, umfassend:
• wenigstens ein optisches Sensorsystem (15) zur Erkennung von Objekten,
• wobei das optische Sensorsystem (15) in wenigstens einem Gehäuse (1) montiert ist, welches und/oder welche jeweils an den Führungsleisten befestigbar ist/sind,
**dadurch gekennzeichnet, dass**
• das Gehäuse (1) und/oder wenigstens eines der Gehäuse (1) einen Beschleunigungssensor (B) zur Messung einer Vibration und zur Lieferung von Vibrationsdaten aufweist, und wobei
• eine Auswerteeinheit (1b) vorgesehen ist, welche aus den Vibrationsdaten auswertet und/oder den Vibrationsdaten zuordnet, ob das Industrietor (13) aus einer der Führungsleisten (12) ausgeschert ist, um diese Informationen an eine Torsteuerung (2)zur Steuerung des Torantriebs (3) und/oder ein Signal weiterzuleiten und somit das Industrietor (13) anzuhalten, zu starten oder weiterlaufen zu lassen.

2. Sicherheitseinrichtung (14) nach Anspruch 1, **dadurch gekennzeichnet, dass** das optische Sensorsystem (15) als:
• Lichtschranke und/oder
• Lichtgitter und/oder
• Distanzsensor, insbesondere als TOF-Sensor ausgebildet ist.

3. Sicherheitseinrichtung (14) nach einem der vorgenannten Ansprüche, **dadurch gekennzeichnet, dass** das Gehäuse (1) und/oder wenigstens eines der Gehäuse (1) jeweils als Sensorleiste (1) ausgebildet ist.

4. Sicherheitseinrichtung (14) nach einem der vorgenannten Ansprüche, **dadurch gekennzeichnet, dass** genau zwei Sensorleisten (1) vorgesehen sind, wobei insbesondere:
• eine erste der Sensorleisten (1) Sender der Lichtschranke und/oder des Lichtgitters (15) und die zweite der Sensorleisten (1) Empfänger umfasst, oder
• eine erste der Sensorleisten (1) Sender und Empfänger und die zweite Sensorleiste Reflektoren zur Reflexion des von den Sendern ausgestrahlten Lichts in Richtung der Empfänger aufweist, oder
• wenigstens eine der Sensorleisten (1) oder die Sensorleiste TOF-Sensoren umfasst.

5. Sicherheitseinrichtung (14) nach einem der vorgenannten Ansprüche, **dadurch gekennzeichnet, dass** die Auswerteeinheit (1b) eine Verbindung (16) zu einem Server (17) und/oder zu einer Cloud zur Analyse der Vibrationsdaten aufweist, wobei insbesondere der Server (17) und/oder die Cloud Bestandteil der Auswerteeinrichtung (1b) sind.

6. Sicherheitseinrichtung (14) nach einem der vorgenannten Ansprüche, **dadurch gekennzeichnet, dass** die Auswerteeinheit (1b), insbesondere der Server (17) und/oder die Cloud dazu ausgebildet sind, zur Auswertung die Vibrationsdaten einer Mustererkennung oder der Erkennung einer Einhüllenden der Vibrationsdaten zu unterziehen.

7. Industrietorsystem (10), umfassend:
• ein Industrietor (13) zum Schließen oder Abdecken einer Toröffnung (11),
• zwei Führungsleisten (12) zur beweglichen Lagerung des Industrietors (13),
• ein Torantrieb (3) zum motorischen Bewegen, insbesondere Auf- und Abrollen des Industrietors (13) innerhalb der Führungsleisten (12),
• eine Sicherheitseinrichtung (14) nach einem der vorgenannten Ansprüche.

8. Industrietorsystem (10) nach einem der vorgenannten Ansprüche, **dadurch gekennzeichnet, dass** die Sicherheitseinrichtung (14) und/oder das Gehäuse (1) und/oder die Gehäuse (1) parallel jeweils an einer der Führungsleisten (12) montiert sind.

9. Industrietorsystem (10) nach einem der vorgenannten Ansprüche, **dadurch gekennzeichnet, dass** die Führungsleisten (12) als U-Profil-Führung ausgebildet sind.

10. Industrietorsystem (10) nach einem der vorgenannten Ansprüche, **dadurch gekennzeichnet, dass** das Industrietor (13) als Rolltor, Folientor, Sektionaltor oder Schnelllauftor ausgebildet ist.

11. Industrietorsystem (10) nach einem der vorgenannten Ansprüche, **dadurch gekennzeichnet, dass** eine Toröffnung (11) vorhanden ist, wobei insbesondere die Führungsleisten (12) gegenüberliegend jeweils an einer Zarge der Toröffnung (11) und/oder das Industrietor (13) am Sturz der Toröffnung (11) angebracht ist/sind.

12. Industrietorsystem (10) nach einem der vorgenannten Ansprüche, **dadurch gekennzeichnet, dass** eine Torsteuerung (2) zur Steuerung des Torantriebs (3) vorgesehen ist, welche mit der Auswerteeinheit (1b) verbunden ist.

13. Industrietorsystem (10) nach einem der vorgenannten Ansprüche, **dadurch gekennzeichnet, dass** das Industrietor (13) sensorfrei ausgebildet ist.

## Claims

1. Safety installation (14) for industrial doors (13) that are mounted movably between two guide rails (12), comprising:
• at least one optical sensor system (15) for recognizing objects,
• wherein the optical sensor system (15) is mounted in at least one housing (1) able to be fastened in each case to the guide rails,
**characterized in that**
• the housing (1) and/or at least one of the housings (1) has an acceleration sensor (B) for measuring a vibration and for supplying vibration data, and wherein
• provision is made for an evaluation unit (1b) that evaluates, from the vibration data, and/or assigns, to the vibration data, whether the industrial door (13) has left one of the guide rails (12) in order to forward this information to a door controller (2) for controlling the door drive (3) and/or a signal and thus to stop or start the industrial door (13) or allow it to continue.

2. Safety installation (14) according to Claim 1, **characterized in that** the optical sensor system (15) is designed as:
• a light barrier and/or
• a light grid and/or
• a distance sensor, in particular as a TOF sensor.

3. Safety installation (14) according to either of the preceding claims, **characterized in that** the housing (1) and/or at least one of the housings (1) is designed in each case as a sensor bar (1).

4. Safety installation (14) according to one of the preceding claims, **characterized in that** exactly two sensor bars (1) are provided, wherein in particular:
• a first of the sensor bars (1) comprises transmitters of the light barrier and/or of the light grid (15) and the second of the sensor bars (1) comprises receivers, or
• a first of the sensor bars (1) has transmitters and receivers and the second sensor bar has reflectors for reflecting the light emitted by the transmitters in the direction of the receivers, or
• at least one of the sensor bars (1) or the sensor bar comprises TOF sensors.

5. Safety installation (14) according to one of the preceding claims, **characterized in that** the evaluation unit (1b) has a connection (16) to a server (17) and/or to a cloud for analysing the vibration data, wherein in particular the server (17) and/or the cloud are part of the evaluation installation (1b).

6. Safety installation (14) according to one of the preceding claims, **characterized in that** the evaluation unit (1b), in particular the server (17) and/or the cloud, are designed to subject the vibration data to pattern recognition or to recognition of an envelope of the vibration data for evaluation purposes.

7. Industrial door system (10), comprising:
• an industrial door (13) for closing or covering a door opening (11),
• two guide rails (12) for movably mounting the industrial door (13),
• a door drive (3) for the motorized movement, in particular rolling up and rolling down, of the industrial door (13) within the guide rails (12),
• a safety installation (14) according to one of the preceding claims.

8. Industrial door system (10) according to one of the preceding claims, **characterized in that** the safety installation (14) and/or the housing (1) and/or the housings (1) are each mounted in parallel on one of the guide rails (12).

9. Industrial door system (10) according to one of the preceding claims, **characterized in that** the guide rails (12) are designed as a U-shaped profile guide.

10. Industrial door system (10) according to one of the preceding claims, **characterized in that** the industrial door (13) is designed as a roller door, film door, sectional door or high-speed door.

11. Industrial door system (10) according to one of the preceding claims, **characterized in that** a door opening (11) is present, wherein in particular the guide rails (12) are each installed opposite one another on a frame member of the door opening (11) and/or the industrial door (13) is attached to the lintel of the door opening (11).

12. Industrial door system (10) according to one of the preceding claims, **characterized in that** provision is made for a door controller (2) for controlling the door drive (3), said door controller being connected to the evaluation unit (1b).

13. Industrial door system (10) according to one of the preceding claims, **characterized in that** the industrial door (13) is designed without sensors.

## Revendications

1. Dispositif de sécurité (14) pour portes industrielles (13) montées mobiles entre deux barres de guidage (12), comprenant :
• au moins un système de détection optique (15) pour la reconnaissance d'objets,
• le système de détection optique (15) étant monté dans au moins un boîtier (1), qui peut/peuvent respectivement être fixé et/ou fixés sur les rails de guidage,
**caractérisé en ce que**
• le boîtier (1) et/ou au moins l'un des boîtiers (1) comporte un capteur d'accélération (B) pour mesurer une vibration et pour fournir des données de vibration, et dans lequel
• il est prévu une unité d'évaluation (1b) qui évalue à partir des données de vibration et/ou associe aux données de vibration le fait de savoir si la porte industrielle (13) est sortie de l'une des barres de guidage (12), afin de transmettre ces informations à une unité de commande de porte (2) destinée à commander l'entraînement de porte (3) et/ou un signal, et ainsi arrêter, démarrer ou poursuivre le déplacement de la porte industrielle (13).

2. Dispositif de sécurité (14) selon la revendication 1, **caractérisé en ce que** le système de détection optique (15) est réalisé sous la forme :
• d'une barrière lumineuse et/ou
• d'une grille lumineuse et/ou
• d'un capteur de distance, notamment sous la forme d'un capteur TOF.

3. Dispositif de sécurité (14) selon l'une quelconque des revendications précédentes, **caractérisé en ce que** le boîtier (1) et/ou au moins l'un des boîtiers (1) est respectivement réalisé sous la forme d'une bande de détection (1).

4. Dispositif de sécurité (14) selon l'une quelconque des revendications précédentes, **caractérisé en ce qu'**il est prévu exactement deux bandes de détection (1), en particulier :
• une première des bandes de détection (1) comprend des émetteurs de la barrière lumineuse et/ou de la grille lumineuse (15) et la seconde des bandes de détection (1) comprend des récepteurs, ou
• une première des bandes de détection (1) comporte des émetteurs et des récepteurs et la seconde bande de détection comporte des réflecteurs destinés à réfléchir la lumière émise par les émetteurs en direction des récepteurs, ou
• au moins l'une des bandes de détection (1) ou la bande de détection comprend des capteurs TOF.

5. Dispositif de sécurité (14) selon l'une quelconque des revendications précédentes, **caractérisé en ce que** l'unité d'évaluation (1b) comporte une liaison (16) avec un serveur (17) et/ou un nuage pour l'analyse des données de vibration, le serveur (17) et/ou le nuage faisant en particulier partie de l'unité d'évaluation (1b).

6. Dispositif de sécurité (14) selon l'une quelconque des revendications précédentes, **caractérisé en ce que** l'unité d'évaluation (1b), en particulier le serveur (17) et/ou le nuage, sont conçus pour soumettre les données de vibration à une reconnaissance de motifs ou à la reconnaissance d'une enveloppe des données de vibration aux fins de l'évaluation.

7. Système de porte industrielle (10), comprenant :
• une porte industrielle (13) pour fermer ou recouvrir une ouverture de porte (11),
• deux barres de guidage (12) pour le montage mobile de la porte industrielle (13),
• un entraînement de porte (3) permettant un mouvement motorisé, en particulier un enroulement et un déroulement, de la porte industrielle (13) à l'intérieur des barres de guidage (12),
• un dispositif de sécurité (14) selon l'une quelconque des revendications précédentes.

8. Système de porte industrielle (10) selon l'une quelconque des revendications précédentes, **caractérisé en ce que** le dispositif de sécurité (14) et/ou le boîtier (1) et/ou les boîtiers (1) sont respectivement montés en parallèle sur l'une des barres de guidage (12) .

9. Système de porte industrielle (10) selon l'une quelconque des revendications précédentes, **caractérisé en ce que** les barres de guidage (12) sont réalisées sous la forme d'un guide profilé en U.

10. Système de porte industrielle (10) selon l'une quelconque des revendications précédentes, **caractérisé en ce que** la porte industrielle (13) est réalisée sous la forme d'une porte roulante, d'une porte à feuillets, d'une porte à sections ou d'une porte rapide.

11. Système de porte industrielle (10) selon l'une quelconque des revendications précédentes, **caractérisé en ce qu'**il est prévu une ouverture de porte (11), les barres de guidage (12) étant en particulier fixées l'une en face de l'autre sur un cadre de l'ouverture de porte (11) et/ou la porte industrielle (13) étant fixée à le linteau de l'ouverture de porte (11).

12. Système de porte industrielle (10) selon l'une quelconque des revendications précédentes, **caractérisé en ce qu'**il est prévu une unité de commande de porte (2) qui est reliée à l'unité d'évaluation (1b) pour commander l'entraînement de porte (3).

13. Système de porte industrielle (10) selon l'une quelconque des revendications précédentes, **caractérisé en ce que** la porte industrielle (13) est réalisée sans capteur.
